(19) Europäisches Patentamt
European Patent Office
Office européen des brevets

(11) **EP 1 165 243 B1**

(12) **EUROPEAN PATENT SPECIFICATION**

(45) Date of publication and mention
of the grant of the patent:
**06.08.2008 Bulletin 2008/32**

(51) Int Cl.:
*B05B 1/04* (2006.01)     *B05B 1/26* (2006.01)
*B08B 3/02* (2006.01)     *B29B 17/00* (2006.01)
*F15D 1/08* (2006.01)

(21) Application number: **00904713.5**

(22) Date of filing: **10.02.2000**

(86) International application number:
**PCT/AU2000/000087**

(87) International publication number:
**WO 2000/047330 (17.08.2000 Gazette 2000/33)**

(54) **ULTRA HIGH PRESSURE LIQUID JET NOZZLE**

HOCHDRUCKSTRAHLDÜSE

BUSE D'EJECTION DE LIQUIDE A TRES HAUTE PRESSION

(84) Designated Contracting States:
**AT BE CH CY DE DK ES FI FR GB GR IE IT LI LU MC NL PT SE**
Designated Extension States:
**AL LT LV MK RO SI**

(30) Priority: **10.02.1999  AU PP860999**

(43) Date of publication of application:
**02.01.2002   Bulletin 2002/01**

(73) Proprietor: **Jet-Net International Pty. Ltd**
**Canning Vale, W.A. 6155 (AU)**

(72) Inventors:
• **KACPEREK, Kazimiez**
**Ocean Reef, W.A. 6027 (AU)**
• **FRIEDMAN, Eitan**
**South Fremantle, W.A. 6162 (AU)**
• **LIWSZYC, Danek**
**Noranda, W.A. 6062 (AU)**

(74) Representative: **McKay, Jacqueline Anne et al**
**Murgitroyd & Company**
**165-169 Scotland Street**
**Glasgow G5 8PL (GB)**

(56) References cited:
WO-A-96/05039          DE-A1- 4 120 613
FR-A- 2 712 826        US-A- 4 347 805
US-A- 4 633 623        US-A- 4 789 104
US-A- 5 170 946        US-A- 5 417 607
US-A- 5 482 215        US-A- 5 597 122
US-A- 5 626 508        US-A- 5 785 582
US-A- 5 833 148

## Description

The present invention is directed to a method and apparatus for disintegrating material such as rubber, plastic and other polymers. This invention is applicable for use in the reclamation of rubber from vehicle tyres, and the invention will be described with respect to this application. It is however to be appreciated that the invention is also applicable for use in other applications such as for cleaning purposes.

The disposal of used vehicle tyres is a growing environmental problem because of the increasing number of vehicles in the world. The traditional methods of disposal, being to use the tyres in landfill or to burn the tyres, do have detrimental effects on the environment. The alternative is to recycle the various parts of the tyres. To this end, there have been ongoing developments of methods to recycle the used tyres to enable the rubber in the tyres to be recycled for other purposes. It would ideally be preferable for economic reasons to use the recycled rubber to produce new tyres. In practice, there has been only limited application of the recycled rubber making it generally uneconomical to conduct large scale recycling of tyres. One reason why this is the situation is that the quality of the recycled rubber obtained from known methods is variable or poor, being mixed with inferior quality rubber and/or other waste products, making it unsuitable for new tyre productions. Also, it is generally necessary to devulcanise the recycled rubber prior to its use in tyre production.

US Patent 5626508 (Rankin et al) discloses a focusing nozzle for producing a jet and a precisely focused, sustained cohesive jet of a mixture of a fluid and abrasive material, having a long coherence length and a prolonged centreline pressure for obtaining clean, precise, sharp-edged kerfs, cuts and grooves in hard substances.

US Patent 5785582 (Stefanik et al) discloses a mixing tube for use in a high pressure system for generating high pressure abrasive fluid jets, the mixing tube comprising a first and second piece, each piece having a length that is substantially equal to the length of the mixing tube. A longitudinal groove is provided in each piece, which extends from a first end to a second end of each piece. The first and second pieces are coupled together such that the first and second longitudinal grooves meet to form a bore that extends longitudinally through the length of the mixing tube.

US Patent No 4633623 (Spitz) discloses a sandblasting nozzle comprising an intake device able to produce a flat water jet, having an aperture angle $\alpha$ in the plane of the jet, within a vacuum chamber, a discharge member having in planes perpendicular to the flat jet, two divergent side walls substantially of aperture $\alpha$ and, on either side of the flat jet, two convergent walls forming an angle $\beta$, said discharge member forming an integral part of the vacuum chamber, and the angle $\beta$ being defined in such a way that within the chamber is produced an adequate vacuum to ensure that the flat jet entrains the abrasive particles introduced by a pipe carrying a mixture of gas and abrasive particles.

In US Patent 5482215 (Veres), there is described a method of reclaiming rubber using ultra high pressure liquid jets to disintegrate the rubber on the tread portion of the tyre. It should be noted that three different grades of rubber are normally used in the manufacture of tyres, the highest grade rubber being used in the tread portion of the tyre, the poorer grades being on the sidewalls and inner surfaces of the tyre. The described method therefore strips the rubber from the tread portion to provide higher quality recycled rubber. The main advantage of using ultra high pressure liquid (UHPL) jets is that it can disintegrate the rubber into a particulate form which does not then need to be devulcanised and can therefore be directly reused. It is preferable for this reason for the particle size to be less than 100 microns in size.

The UHPL jets used in the abovementioned method are delivered from a series of UHPL nozzles. These nozzles are normally used in the cutting of different materials, and the UHPL jet delivered by such nozzles produces a cut within the rubber having a narrow and deep V-shaped section. This is because the UHPL nozzle has a nozzle opening which is circular in shape and which therefore produces a jet having a generally circular cross section. The effect of the pressure gradient across the resultant jet is that the maximum pressure is at the centre of the jet cross-section, the pressure decreasing towards the outer periphery of the jet cross-section. Because of the shape of the resultant cut by the UHPL jet, only a small amount of rubber is stripped from the tread portion by the nozzle at each pass of that nozzle. The abovenoted method seeks to increase the amount of rubber stripped at each pass by using a plurality of nozzles. Although this does increase the amount of rubber when stripped at each pass, nevertheless, the remaining upstanding portions of rubber of the tread portion after each pass is difficult to remove. This is because the remaining upstanding portions of rubber following the initial passes are more flexible and therefore more readily deflected by the UHPL jets. The remaining portions of the rubber when subsequently removed can also be larger than the desired size of 100 microns or less.

Although a greater amount of material can be stripped when the nozzle opening is made larger in size to produce a wider diameter UHPL jet, the size of the particulate material produced by the resultant UHPL jet are generally of a greater than desired size.

It is therefore an object of the present invention to overcome at least one of the disadvantages of the prior art.

With this in mind, according to one aspect of the present invention, there is provided a nozzle system according to claim 1.

The liquid jet may typically be at an ultra high pressure from about 20,000 KPa. Liquid at such ultra high pressures may be used in material reclamation applications. The liquid jet may also be at a relatively lower high pressure, typically up to 10,000 KPa. At such pressures, the liquid jet may also be used for cleaning and abrasive cleaning applications.

In the use of the nozzle system for reclamation applications, the use of a relatively planar liquid jet allows for a wider channel shaped "cut" in the material than would be possible by a conventional nozzle which produces a narrow V-shaped cut in the material. This is because the cross section of the jet is generally slot shaped, being wide in one plane and relatively narrow lateral to that one plane. Furthermore, the pressure gradient across the width of the jet may be relatively uniform. The jet therefore cuts to a more uniform depth across the jet to produce a relatively flat bottomed channel shaped cut in the material. Furthermore, the use of such a relatively planar liquid jet produces a more uniform particle size. The result is that a greater amount of material can be disintegrated at each pass of the nozzle when compared with a standard nozzle. Furthermore, by having a series of said nozzles set up for operation in a row or other configuration, the amount of remaining upstanding portions of material after the pass of the nozzles can be substantially reduced or even eliminated.

The use of a planar liquid jet for cleaning and abrasive cleaning applications also provides for more effective and efficient cleaning. Unlike the conical liquid jets currently used for such purposes, a planar liquid jet provides a more uniform distribution of the liquid pressure across the liquid jet. More uniform cleaning is therefore achieved along the planar liquid jet. By comparison, in a conical liquid jet, a greater distribution of the liquid is provided towards the centre of the liquid jet than towards the periphery thereof. This results in less efficient cleaning.

According to one preferred embodiment according to the present invention, the delivery passage passing through the nozzle body may have a uniform lateral cross section at least substantially the same as the shape of the nozzle opening. Therefore, the upstream opening of the delivery passage in the nozzle body may also be slot shaped and may have the same shape as the nozzle opening. In other words, the upstream opening may have an elongate length at least substantially identical to the elongate length of the nozzle opening, and the lateral thickness of the upstream opening may be at least substantially identical with the lateral thickness of the nozzle opening. The delivery passage may be substantially defined by a pair of parallel planar walls extending through the nozzle body from the upstream opening to the nozzle opening thereof. The delivery passage according to this possible arrangement may have

the following possible configuration advantageous to the operation of the nozzle:

$$\frac{H_N}{T} \geq 2$$

where:

H$_N$ is the total length of the delivery passage from the upstream opening to the nozzle opening of the nozzle body; and
T is the lateral thickness of the nozzle opening.

According to a further preferred embodiment according to the present invention, the delivery passage passing through the nozzle body may have a uniform cross-section at least substantially the same as the shape of the nozzle opening in an initial portion of the delivery passage for a predetermined extent immediately upstream of said nozzle opening. Therefore, the delivery passage may be initially substantially defined by a pair of parallel planar walls for said initial portion of the delivery passage. Beyond said initial portion, the planar walls may be inclined relative to each other to provide a wedge shaped portion of the delivery passage. Therefore, according to this preferred embodiment, the lateral thickness of the upstream opening may be greater than the lateral thickness of the nozzle opening.

The delivery passage according to this preferred embodiment may have the following possible configuration advantageous to the operation of the nozzle:

$$\frac{H}{T} \geq 2$$

where:

H is the length of the initial portion of the delivery passage immediately upstream from the nozzle opening of the nozzle body; and
T is the lateral thickness of the nozzle opening of the nozzle body.

Furthermore, it is preferred that:

$$\frac{H_N - H}{T} \geq 5$$

where:

H$_N$ is the total length of the delivery passage from the upstream opening to the nozzle opening of the nozzle body.

The lateral cross-section of the delivery passage may maintain an elongate length at least substantially the same as the elongate length of the nozzle opening from the upstream opening to the nozzle opening. Alternatively, the lateral cross-section of the delivery passage may maintain an elongate length at least substantially the same as the elongate length of the nozzle opening for the initial portion or another specified extent of the delivery passage immediately upstream from the nozzle opening. Beyond said initial portion or specified extent of the delivery passage, the passage may widen such that the elongate length of the upstream opening is greater than the elongate length of the nozzle opening. The widening of the delivery passage may be gradual. It is however also envisaged that the widening may be in a step fashion.

The angle of inclination of the planar wall in the wedge shaped portion of the delivery passage relative to the planar walls immediately upstream from the nozzle opening in the initial portion thereof may be equal to or less than 13°. This inclination angle provides for decreased turbulence or facilitates laminar flow in the liquid flow.

The nozzle system may further include a supply line for supplying high or ultra high pressure liquid to the nozzle body. The supply line may have an inner bore, the lateral cross-section of which may have dimensions greater than or equal to the length and width of the nozzle opening. Flow straightening vanes or other flow straightening means may be provided immediately upstream of the nozzle body within the inner bore of the supply line to minimise the turbulence of the liquid flow to the nozzle body.

A flow insert may for example be located within the inner bore of the supply line. The flow insert may have an insert passage extending therethrough. The insert passage may have a lateral cross-section having a shape corresponding to the shape of the upstream opening of the nozzle body. The insert passage may for example have a slot shaped lateral cross-section where the upstream opening is also slot shaped.

The insert passage may therefore preferably have the following configuration:

$$L_{N-1} \geq L_N$$

$$T_{N-1} \geq T_N$$

$$\underline{H}_{N-1} \geq 5$$

$$T_{N-1}$$

$$L_N \geq L$$

where:

$L_N$ is the elongate length of the nozzle body upstream opening;
$L_{N-1}$ is the elongate length of the lateral cross-section of the insert passage;
$T_N$ is the lateral width of the nozzle body upstream opening; and
$T_{N-1}$ is the lateral width of the lateral cross-section of the insert passage.

According to a further alternative preferred embodiment, the upstream opening of the delivery passage may be at least substantially circular in shape. Therefore, the walls of the delivery passage may incline inwardly in the shape of a flattened cone in a conical portion of the delivery passage towards the slot shape nozzle opening. The lateral cross section of the delivery passage immediately upstream from the nozzle opening may have at least substantially the same shape as the nozzle opening for a predetermined extent upstream of the nozzle opening. Therefore, the walls of the liquid delivery passage may be initially planar in an initial portion of the delivery passage for a predetermined extent immediately upstream from the nozzle opening, the wall subsequently expanding outwardly and with an increasing curvature such that the upstream opening of the delivery passage is at least substantially circular in shape.

This configuration facilitates substantially laminar liquid flow from the supply line to the delivery passage without the need of any flow straightening means.

The delivery passage referred to above may have the following configuration:

$$\frac{\underline{H}}{T} \geq 2$$

Where:

H is the length of the initial portion of the delivery passage immediately upstream from the nozzle opening of the nozzle body; and
T is the lateral thickness of the nozzle opening of the nozzle body.

Preferably,

$$\frac{\underline{H}_N - H}{T} \geq 5$$

where:

$H_N$ is the total length of the delivery passage from the upstream opening to the nozzle opening of the nozzle body.

The nozzle body may be constructed in two sections the nozzle body being "split" in a plane extending through the length of the delivery passage. The split may be in a plane which bisects the slot opening. This arrangement facilitates the manufacture of the nozzle body as channels defining one side of the delivery passage can be separately machined into a respective section of the nozzle body. The two sections thereof can then be assembled together to form the nozzle body, with the delivery passage being formed generally by the channels when brought together. The channels may therefore define the walls of the delivery passage including the slot opening thereof. Alternatively, at least one spacer element may be located between the two nozzle body sections, the thickness of the at least one spacer element defining the lateral thickness of the slot opening. Therefore, only the portion of the delivery passage adjacent the upstream opening may be machined into each nozzle body section, the initial slot shaped portion of the delivery passage being defined by means of the at least one spacer element. This arrangement allows the lateral thickness of the slot opening to be adjusted. It also facilitates the "reconditioning" of the nozzle body after extended use as the contact and end surfaces of the nozzle sections can be "lapped" as so required when the nozzle body is worn from use.

In an alternative related preferred embodiment, each nozzle body section may include a further separate base portion. The base portion may be made from a wear resistant material typically a carbide, alumina, sapphire or diamond ceramic compound. When the two nozzle body sections are brought together, the respective base portions define the initial slot shaped portion and the nozzle opening for the nozzle body. The base portion may further define a "land" extending into and providing a step between the portion of the delivery passage adjacent the upstream opening and the initial slot shaped portion thereof. This band which may be typically up to 3mm wide, acts to provide for a smooth transition of the liquid flow through the delivery passage, the flow approximately laminar flow. It has been found that the land forms an area of relatively slow moving liquid adjacent it. The remaining liquid can then flow past this stationary fluid through into the initial portion of the delivery passage.

The nozzle body is accommodated within a nozzle mount for holding the nozzle body in position. The nozzle body is located within a cavity in the nozzle mount which may allow high pressure liquid to circulate around the exterior of the nozzle body. A seal may be provided between the downstream end of the nozzle body and an inner face of the nozzle mount. This helps to substantially balance the liquid pressure between the exterior of the nozzle body and the delivery passage therein to minimise the possibility of "bursting" of the nozzle body, particularly when the nozzle body has been made in two separate parts.

According to another aspect of the present invention, there is provided a method of disintegrating material including exposing the material to at least one ultra high pressure liquid jet to thereby disintegrate the material, the jet being provided by a high or ultra high pressure liquid nozzle system of the present invention.

The delivery passage has a cross-sectional flow area which may be at a minimum at least at the nozzle opening.

The material may preferably be exposed to a plurality of said liquid jets.

The material may be rubber from a vehicle tyre, in particular, rubber from the tread portion of the tyre. It is however also envisaged that the method according to the present invention be used on other materials such as plastics and other polymers.

The use of the method according to the present invention leads to more uniform particle size of the particulate material. This is because of the type of UHPL jet produced by the nozzle according to the present invention and the shape and configuration of the cut produced by that jet in the material. Therefore, in the case of rubber from vehicle tyres a higher quality recycled rubber can be produced, with the particles being relatively uniform and preferably less than 100 microns in size.

According to a further aspect of the present invention, there is provided a method of cleaning, including exposing an area to be cleaned to a high or ultra high pressure liquid jet, generated by a nozzle system according to the present invention.

As the liquid jet has a relatively uniform pressure gradient across the jet, this provides for more efficient cleaning by the jet when compared with conventional conical liquid jets.

It is also envisaged that the nozzle according to the present invention can be used for liquid abrasive cleaning applications.

With this in mind, the present invention provides in another aspect a liquid abrasive cleaning system including:

a nozzle system according to the present invention;
a mixing chamber located downstream of the nozzle opening through which the liquid jet is directed by the nozzle, the mixing chamber including supply means for supplying an abrasive material to the mixing chamber for mixing with the liquid jet, and
a focusing conduit extending from the mixing chamber for directing the liquid jet mixed with abrasive material to an area to be cleaned.

The use of a planar liquid jet in such an application provides for a greater area coverage in each transit of the cleaning system.

The mixing chamber may provide an elongate interior cavity for accommodating the liquid jet. The supply means may include at least one supply opening provided along at least one side of the elongate cavity through which abrasive material may be supplied. These supply openings may preferably be provided on either side of the cavity to allow the planar liquid jet to be "coated" on either side by this abrasive material. It should be noted that the mixing of the abrasive material with the liquid jet may be substantially on the outer periphery thereof resulting in said coating of the liquid jet by the abrasive material.

Typical abrasive materials that could be used include "garnet" sand alumina powder or any other similar cutting mediums.

The abrasive material may be drawn into the mixing chamber by virtue of a "Venturi" effect arising from the passage of the liquid jet through the mixing chamber.

The focusing conduit may have a focusing passage passing therethrough, the liquid jet mixed with abrasive material being directed through the focusing passage to the area to be cleaned. The focusing passage may therefore have a slot shaped lateral cross-section to accommodate the planar liquid jet.

The focusing conduit may be dimensioned as a function of the lateral thickness of the nozzle opening of the nozzle body to optimise the efficiency of the operation of the focusing conduit. The focusing conduit may have the followingconfiguration:

$$\frac{F}{T} \geq 3$$

$$\frac{L_F}{T} \geq 100$$

where:

F is the lateral thickness of the focusing passage;
T is the lateral thickness of the nozzle opening of the nozzle body; and
$L_F$ is the length of the focusing conduit.

It will be convenient to further describe the present invention with respect to the accompanying drawings which illustrate preferred embodiment of the present invention. Other arrangements of the invention are possible, and consequently, the particularity of the accompanying drawings is not to be understood as superseding the generality of the preceding description of the invention in the drawings:

Figure 1 is a sidecross-sectional view of a nozzle assembly according to the present invention;

Figure 2a is a side cross-sectional view of a first preferred embodiment of a nozzle body according to the present invention;
Figure 2b is a cross-sectional view along lines AA of Figure 2a;
Figure 2c is a cross-sectional view along lines BB of Figure 2a;
Figure 3 is an isometric view of the internal volume of the delivery passage of the nozzle of Figure 2a;
Figure 4a is a side cross-sectional view of an alternative arrangement of a nozzle body according to the present invention;
Figure 4b is an end view of the nozzle body of Figure 4a;
Figure 5a is an end view of a further preferred embodiment of a nozzle body according to the present invention;
Figure 5b is a side cross-sectional view along line AA of Figure 5a;
Figure 5c is a side cross-sectional view along line BB of Figure 5a;
Figure 6a is a side cross-sectional view of a nozzle assembly similar to Figure 1, but having the nozzle body of Figure 5a;
Figure 6b is a cross-sectional view along line AA of Figure 6a;
Figure 7a is a perspective view of a nozzle body according to yet another alternative preferred embodiment according to the present invention;
Figure 7b is a perspective view of a nozzle body section of the nozzle body of Figure 7a;
Figure 8a is a perspective view of a nozzle mount for the nozzle body of Figure 7a;
Figure 8b is a plan view of the nozzle mount of Figure 8a;
Figure 9a is a cross-sectional view of a cut made by a conventional UHPL nozzle;
Figure 9b is a cross-sectional view of a cut made by a UHPL nozzle according to the present invention;
Figure 10a is a perspective view of a nozzle body according to a further preferred embodiment according to the present invention;
Figure 10b is a perspective view of a nozzle body section of the nozzle body of Figure 10a;
Figure 11 a is a side cross-sectional view of a liquid abrasive cleaning system according to the present invention; and

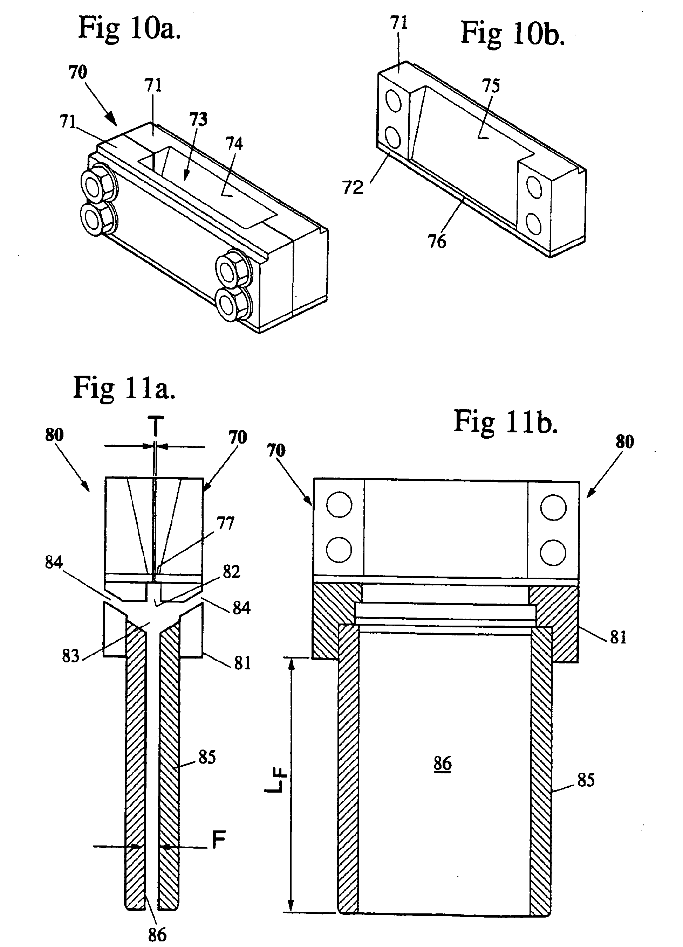

Figure 11 b is a plan cross-sectional view of the liquid abrasive cleaning system of Figure 11a.

In the following description, a distinction is made between high pressure and ultra high pressure liquid. High pressure liquid has a pressure of up to 20,000 KPa. Ultra high pressure liquid will have pressure greater than 20,000 KPa. It should however be noted that the invention is not limited to these pressures and can be used for a wide range of liquid pressures.

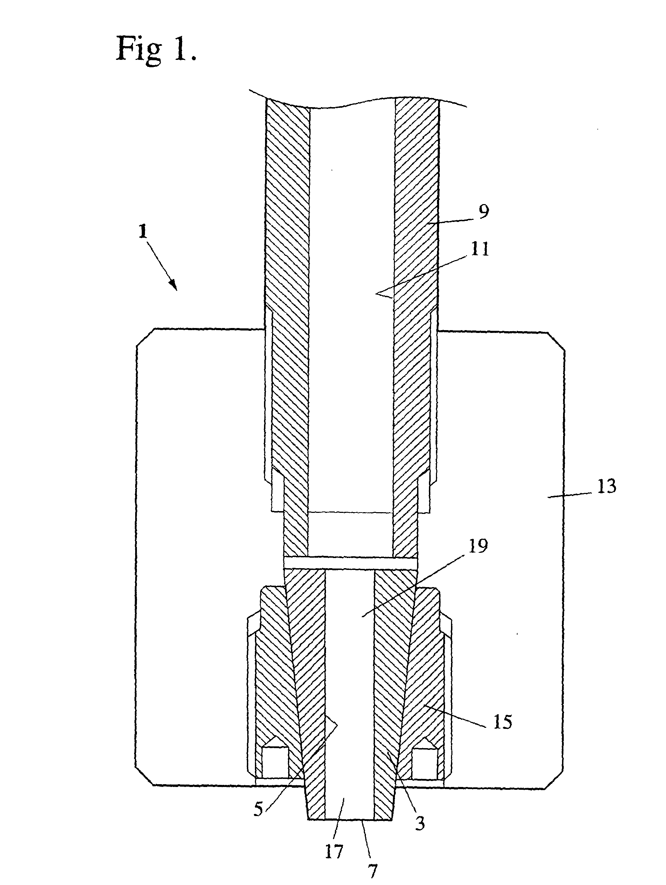

Referring initially to Figure 1, there is shown an ultra high pressure liquid (UHPL) nozzle assembly 1 having a nozzle body 3 according to the present invention. The nozzle body 3 has a delivery passage 5 passing therethrough which ultra high pressure liquid can pass to a nozzle opening 7 of the nozzle body 3.

The ultra high pressure liquid is supplied by a supply line 9 having an inner bore 11 through which the ultra high pressure liquid is supplied. The nozzle body 3 and supply line 9 are held together by means of a housing 13 with a nozzle mount 15 accommodated within the housing 13, holding the nozzle body 3 in place.

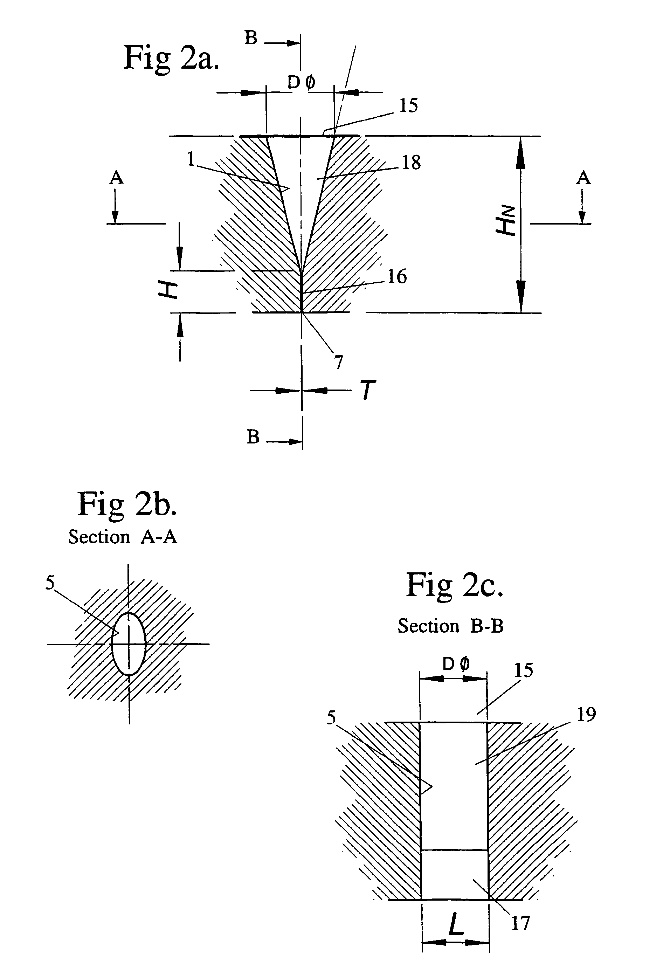

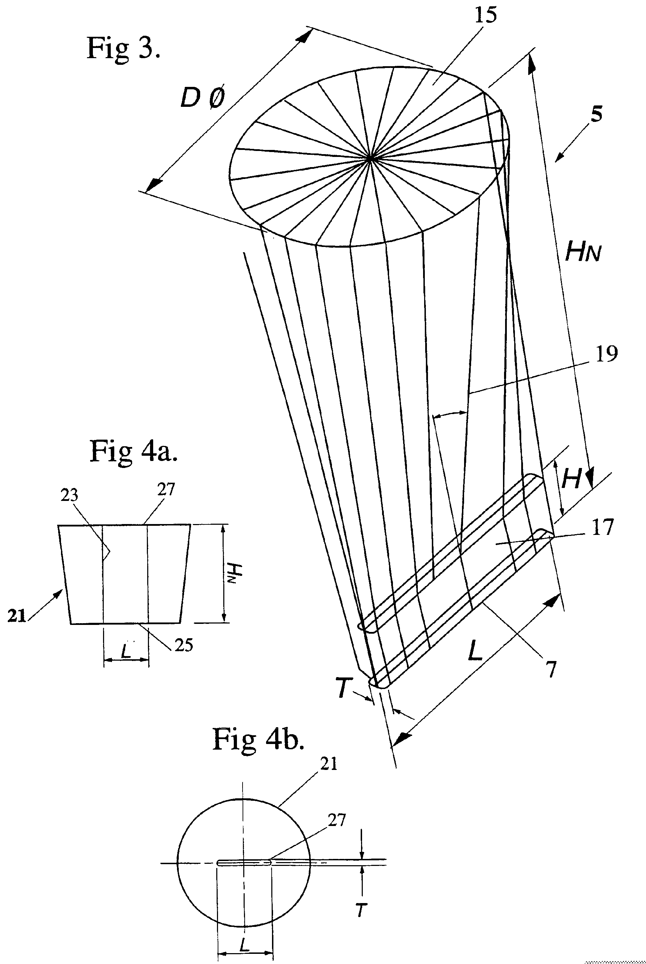

The configuration of the delivery passage 5 of the nozzle body 3 shown in Figure 1 is more clearly shown in Figures 2a to c and Figure 3. The nozzle opening 7 is slot shaped having a elongate length L and thickness T. The delivery passage 5 has an upstream opening 15 which is circular in shape having a diameter D. In the illustrated arrangement, the elongate length L of the nozzle opening 7 is at least substantially equal to the diameter D of the upstream opening 15. The nozzle body 3 has a height $H_N$ and the delivery passage 5 extends completely through the nozzle body 3 from the upstream opening 15 to the nozzle opening 7. For a predetermined extent H immediately upstream of the nozzle opening 7 in an initial portion 16 thereof, the delivery passage 5 has the same cross-section as the shape of the nozzle opening 7. The delivery passage 5 therefore includes two parallel planar walls 17 in this section thereof. Between this section and the upstream opening 15 in a conical portion 18 thereof, the walls 19 of the delivery passage 5 diverge outwardly in the shape of a flattened cone and progressively increase in curvature towards the circular upstream opening 15. This conical portion 18 of the delivery passage allows for substantially laminar flow of liquid from the supply line 9 to the delivery passage 3.

Experimentation involving this nozzle body 3 has shown a favourable relationship between the lateral thickness T of the nozzle opening 7 and the elongate extent H upstream from the nozzle opening 7.

In particular:

$$\frac{H}{T} \geq 2$$

Preferably:

$$\frac{H_N - H}{T} \geq 5$$

where:

H is the length of the initial portion of the delivery passage immediately upstream from the nozzle opening of the nozzle body;

$H_N$ is the total length of the delivery passage from the upstream opening to the nozzle opening of the nozzle body; and

T is the lateral thickness of the nozzle opening.

By way of example only, referring to Figures 2a to c, the delivery passage 5 may have the following dimensions as follows:

D=6mm
H = 13mm
L = 6mm
T = 0.16mm
$H_N$ = 35mm

Figures 4a and b show an alternative arrangement of a nozzle body 21 according to the present invention. The nozzle body 21 also has a delivery passage 23 with a slot shaped nozzle opening 25 at the downstream end of the nozzle body 21. However, unlike the previously described arrangement, the delivery passage 23 retains a uniform cross-section corresponding to the shape of the nozzle opening 25 through the nozzle body 21. Therefore, the upstream opening 27 of the nozzle body 21 is similarly slot shaped as the nozzle opening 25.

The delivery passage 23 has the following configuration:

$$\frac{H_N}{T} \geq 2$$

where:

$H_N$ is the total length of the delivery passage from the upstream opening to the nozzle opening of the nozzle body; and

T is the lateral thickness of the nozzle opening.

This arrangement is potentially more convenient to manufacture than the earlier described arrangement. Flow straightening arrangement vanes (not shown) may however need to be provided within supply line 9 supplying liquid to the nozzle body 21 in view of the likely increased turbulence of the fluid due to the shape of the upstream opening 27.

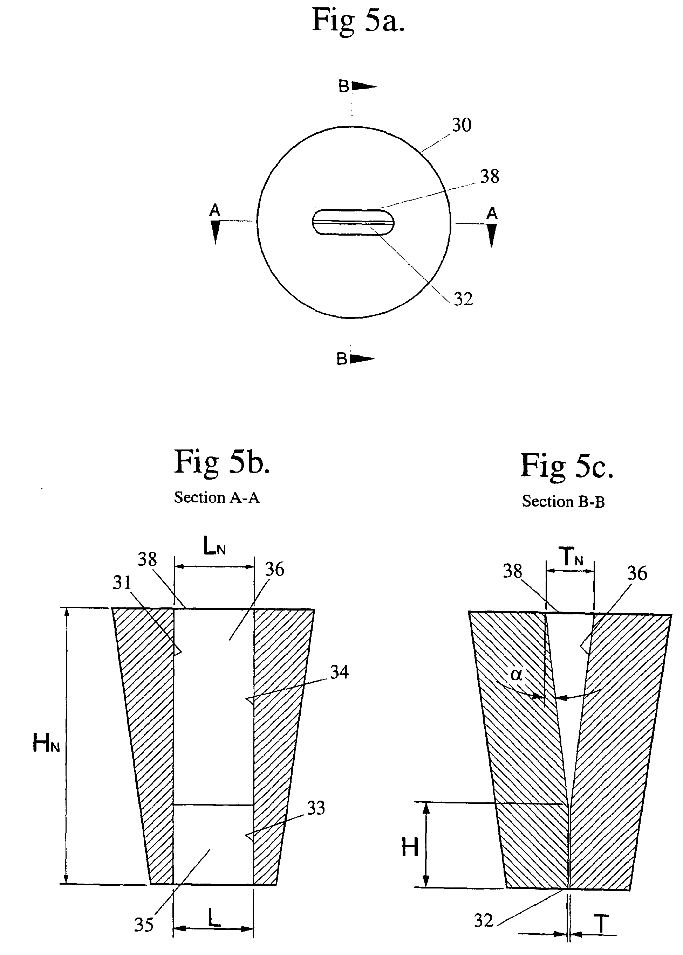

Figures 5a to 5b show a further possible arrangement of a nozzle body 30 according to the present invention. The delivery passage 31 of this nozzle body 30 has a slot shaped nozzle opening 32 having an elongate length L and lateral width T as in the previously described arrangements. Furthermore, an initial portion 33 of the delivery passage 31 extends for a predetermined extent H immediately upstream of the nozzle opening 32, the initial portion 33 having a generally uniform cross-section least substantially the same shape as the nozzle opening 32. The initial portion 33 is therefore substantially defined by a pair of parallel planar walls 35. This initial portion 33 is therefore similar to the initial portion 16 of the arrangement shown in Figures 2a to 3. One significant difference is that the delivery passage 31 includes a wedge shaped portion 34 extending from the initial portion 33 thereof, the wedge shaped portion 34 having planar walls 36 inclined relative to the parallel planar walls 35 of the initial portion 33. The inclined planar walls 36 extend outwardly from the initial portion 33 to substantially define the wedge shaped portion 34 of the delivery passage 31. Each inclined wall 36 may have an inclination angle, preferably equal to or less than 13°, relative to the planar wall 35 of the initial portion 33 to which the inclined wall 36 extends. The abovenoted inclination angle helps to minimise turbulence or facilitate laminar flow in the liquid flow though the delivery passage 31.

Because of the inclination of the inclined walls 36, the upstream opening 38 of the nozzle body 30 has a lateral thickness $T_N$ greater than the lateral thickness T of the nozzle opening 32. The elongate length $L_N$ of the upstream opening 38 may be at least substantially equal to the elongate length L of the nozzle opening 32. In an alternative possible configuration, the delivery passage 31 may gradually widen, at least from the initial portion 33 thereof such that the elongate length $T_N$ of the upstream opening 38 is greater than the elongate length T of the nozzle opening 32.

It has also been found that the following configuration is advantageous for the operation of this arrangement:

$$\frac{H}{T} \geq 2$$

where:

H is the length of the initial portion of the delivery passage immediately upstream from the nozzle opening of the nozzle body; and
T is the lateral thickness of the nozzle opening of the nozzle body.

Furthermore, it is advantageous that:

$$\frac{H_N - H}{T} > \sim 5$$

where:
$H_N$ is the total length of the delivery passage from the upstream opening to the nozzle opening of the nozzle body.

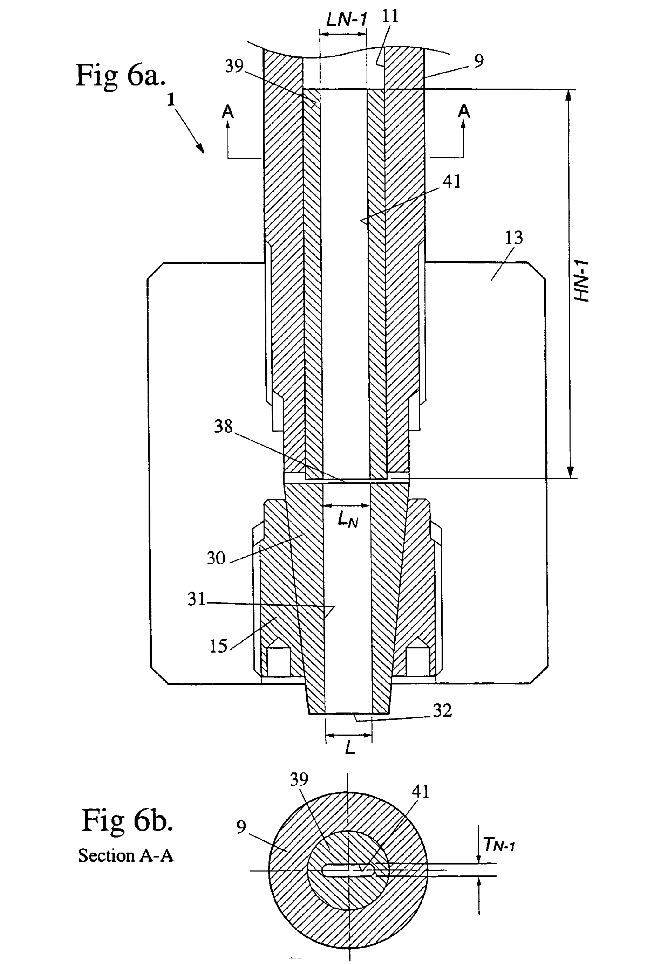

Figure 6a is similar to Figure 1, and corresponding integers are conveniently designated with the same reference numerals. The main difference is that the nozzle assembly 1 is shown with the nozzle body 30 of Figures 5a to c. This nozzle body 30 has a generally slot shaped upstream opening 38, while the inner bore 11 of the supply line 9 supplying ultra high pressure liquid to the upstream opening 38 is typically circular in cross-section. This will result in substantial turbulence being generated within the fluid immediately upstream of the nozzle body 30 resulting in a loss in fluid pressure. It is therefore advantageous to include means to reduce or eliminate this turbulence. Referring in particular to Figure 6b, a flow inset 39 may be located within the inner bore 11 of the supply line 9 immediately upstream of the nozzle body 30. The flow insert 39 has a slot shaped insert passage 41 extending therethrough. The use of such an insert 39 will help to smooth the fluid flow to the upstream opening 38 of the nozzle body 30. It is to be appreciated that such a flow insert 39 could also be used for, for example, the nozzle body 21 of Figures 4a and b.

The insert passage 41 may have the following configuration:

$$L_{N-1} \geq LN$$

$$T_{N-1} \geq TN$$

$$\frac{H_{N-1}}{T_{N-1}} \geq 5$$

where:

$L_N$ is the elongate length of the nozzle body upstream opening;
$L_{N-1}$ is the elongate length of the lateral cross-section of the insert passage;
$T_N$ is the lateral width of the nozzle body upstream opening; and
$T_{N-1}$ is the lateral width of the lateral cross-section of the insert passage.

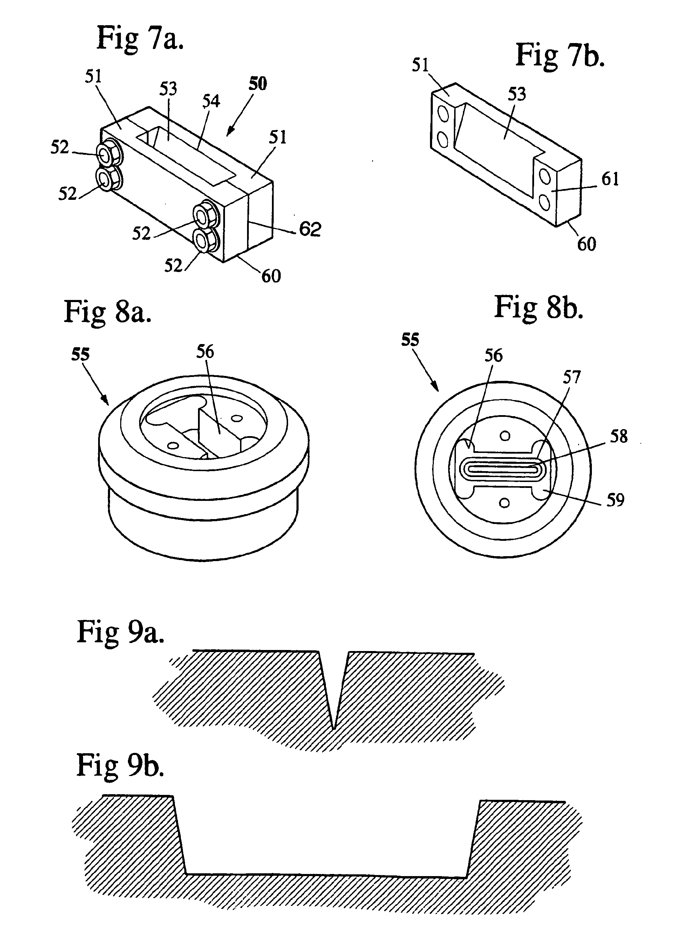

Referring the Figures 7a and 7b, there is shown a nozzle body 50 according to yet another alternative arrangement according to the present invention. The nozzle body 50 is formed in two nozzle body sections 51, the "split" of the nozzle body 50 being in a plane extending through the length of the delivery passage 54 and bisecting the slot opening (not shown) of the nozzle body 50. In each nozzle body section 51 there is provided a channel 53. When the nozzle section 51 are assembled together, the channels 53 together form at least part of the delivery passage 54 of the nozzle body 50.

In the illustrated arrangement, the delivery passage 54 is similar in shape to the embodiment shown in Figures 5a to 5c in having a wedge shape portion adjacent the upstream opening of the nozzle body 50. One or more spacer element 62 are provided between each nozzle body section 51, the nozzle body section 51 being secured together by fastening members 52. The thickness of the spacer element (s) 62 determines the lateral thickness of the slot opening of the nozzle body 50. This arrangement therefore allows for the lateral thickness of the slot opening to be adjusted by using spacer elements of different thickness or sandwiching more than one spacer element at a time between the nozzle body sections 51. At least one spacer element 62 can be provided between the nozzle body section 51. Alternatively, more than one spacer element 62 can be located between the nozzle body section 51 as required.

The nozzle body 50 is supported in a nozzle mount 55 such as that shown in Figures 8a and 8b. This nozzle mount 55 includes a cavity 56 in which the nozzle body 50 can be placed. The cavity 56 has an inner face 59 in which is provided a slot opening 58. This nozzle mount slot opening 58 is aligned with the slot opening of the nozzle opening 50 when supported therein. An "O" ring 57 is located between a lower end face 60 of the nozzle body 50 and the inner face 59 of the nozzle mount cavity 56.

This arrangement allows high pressure liquid to circulate around the nozzle body 50, with the end face 60 pressed against the inner face 59. This ensures that the only high pressure liquid passing through the nozzle opening 58 of the nozzle mount 55 is from the delivery passage 54 of the nozzle body 50. High pressure liquid is prevented from entering the nozzle mount slot opening 58 from the area surrounding the nozzle body 50. This arrangement helps to substantially balance the liquid pressure between the exterior of the nozzle body 50 and the delivery passage 54 thereof to minimise the possibility of the "bursting" of the nozzle body 50 that could occur if there is a substantial difference between the pressure within the delivery passage 54 and the exterior of the nozzle body 50.

The nozzle body arrangement shown in Figure 7a and 7b is relatively straight forward to manufacture because the delivery passage 54 is in part provided by channels 53 machined in the contact face 61 of each nozzle section 51. Furthermore, the nozzle body 50 can be readily "reconditioned" after extended use where there has been wear of the nozzle opening thereof, by "lapping" the contact face 61 and end face 60 of each nozzle body section 51.

The nozzle body 3, 21, 30, 50 according to the present invention provides a relatively planar UHPL jet which results in a relatively wide channel shaped cut in the material exposed to such a jet. The resultant particulate material produced by the jet in the case of tread rubber is relatively uniform in size, preferably less than 100 microns in size.

A comparison of the cut made by a conventional UHPL nozzle (Figure 9a) and an UHPL nozzle according to the present invention (Figure 9b) shows the greater area of the cut provided by the latter nozzle.

The nozzle body 70 shown in Figures 10a and 10b is similar to the embodiment shown in Figures 7a and 7b in being formed in two separate nozzle body sections 71, one of which is shown in Figure 10b. The principal difference is that each nozzle body section 71 includes a base portion 72 formed of wear-resistant material such as sapphire or diamond ceramic compounds. The base portion 72 when the nozzle body 70 is assembled defines the initial slotted shaped portions of the delivery passage 73. The rest of the nozzle body section 71 provide the wedge shaped portion 74 defined by inclined walls 75 provided in each nozzle body section 71. The use of wear-resistant base portion 72 help to improve the long term accuracy and reliability of the nozzle body 70. It is however also possible to provide a "land 76" with the base portion 72 for each nozzle body section 71, this land 76 being provided adjacent the shallow end of the inclined wall 75. The land can for example extend in the range of between 0 to 3 mm generally laterally from the end of the inclined wall 75. It has been found that the provision of a land 76 on either side of the initial portion of the delivery passage 73 provides a zone of slow moving liquid immediately adjacent the band 76. This zone acts to direct the remaining liquid through the delivery passage 73 to provide a smooth transition to the flow to the slot shaped portion of the delivery passage 73. The result is a fluid flow which approximates laminar flow.

In the above embodiment, we have described the nozzle system according to the present application with respect to reclamation applications where pressures from 5000 to 30,000 KPa can be used. It should be noted that the nozzle according to the present invention also be used for cleaning applications. The nozzle can be used directed to provide a planar liquid jet for cleaning. In such applications, the liquid pressure can be up to 20,000 KPa.

It is also possible to use the nozzle system according to the present invention in liquid abrasive cleaning applications as part of a system 80 as shown in Figures 11a and 11b. The liquid abrasive cleaning system 80 includes the nozzle body 70 as shown in Figures 10a and 10b. It should be noted that other nozzle body embodiments could also be used in the applications. The system 80 further includes a mixing chamber 81 having an elongate interior cavity 83. As elongate inlet opening 82 is provided along the length of the cavity 83, this inlet opening 82 being aligned with the slot shaped nozzle opening 77 of the nozzle body 70. Supply openings 84 for supplying abrasive material to the cavity 83 are also provided along either side thereof.

A focusing conduit 85 extends from the mixing chamber 81 and directs the liquid jet when mixed with abrasive material through to the area to be cleaned. The focussing conduit 85 can have a focusing passage 86 with a slot shaped lateral cross-section to accommodate the planar liquid jet.

During operation of the liquid abrasive cleaning system 80, the liquid jet from the nozzle body 70 passes through the cavity 83 of the mixing chamber 81. Abrasive material such as garnet sand or alumina powder are supplied through the supply openings 84, this material being drawn into the cavity 83 by the Venturi effect arising from the passage of the liquid jet through the mixing chamber 83. The abrasive material therefore "coats" the liquid jet when passing through the mixing chamber. The focusing conduit 85 then acts to direct the liquid jet to the area to be abrasively cleaned.

In such applications, the liquid pressure supplied to the nozzle body 70 can be in the order of between 10,000 to 20,000 KPa. This range falls between the pressure range used for cutting applications, and the pressure range used for direct liquid cleaning by the nozzle according to the present invention. It should however be noted that the invention is not necessarily restricted to use within these ranges for each application.

Although this invention has been described by way of an example with reference to possible arrangements thereof, it is to be understood that modifications or improvements may be made thereto without departing from the scope of the invention. For example, in the abovedescribed arrangements, at least a portion of the delivery passage is defined by parallel planar walls. It is however also envisaged that the delivery passage may be defined by inclined planar or curved walls extending all the way from the upstream opening to the nozzle opening of the nozzle body with no parallel portions thereof. The delivery passage would therefore be wedged shaped or a flattened cone shape without any initial parallel portion. Furthermore, in the abovedescribed arrangements, the nozzle opening is shown flush with the end face of the nozzle body. It is however also envisaged that the nozzle opening be provided by a "throat" within the delivery passage, the throat being recessed inwardly from the end face of the nozzle body. The delivery passage can therefore narrow progressively to the throat providing the nozzle opening, and may then expand outwardly again in a similar fashion to a Venturi. The throat will still however retain the slot shape according to the present invention.

**Claims**

1.  A nozzle system for delivering a high or ultra high pressure liquid, the nozzle system including a nozzle mount (55) and a nozzle body (50, 70), the nozzle body (50, 70) having a delivery passage (54, 73) passing therethrough to a nozzle opening at an end face (60) of the nozzle body (50, 70), wherein the nozzle opening is slot shaped to thereby deliver a relatively planar shaped high or ultra high pressure liquid jet therefrom, **characterised by** the nozzle mount (55) having a cavity (56) in which the nozzle body (50) is located, wherein high or ultra high pressure liquid can circulate around the exterior of the nozzle body (50).

2.  A nozzle system according to claim 1 wherein the nozzle mount (55) has an inner face (59) with a discharge opening (58) therein, the nozzle body (50) being receivable in the cavity (56) with the nozzle end face (60) in sealing engagement the mount inner face (59) and the nozzle opening in alignment with the discharge opening (58) whereby a liquid jet issuing from the nozzle opening can discharge through the discharge opening (58) and whereby sealing engagement between the nozzle end face (60) and the mount inner face (59) establishes a liquid seal therebetween surrounding the aligned nozzle opening and discharge opening (58).

3.  A nozzle system according to claim 2 wherein said sealing engagement is established by an annular seal 57 disposed about the aligned openings and between the nozzle end face (60) and mount inner face (59).

4.  A nozzle system according to claim 3 wherein the annular seal (57) comprises an O-ring (7).

5.  A nozzle system as claimed in any one of the preceding claims wherein at least an initial portion (16, 33) of the delivery passage (5, 23, 31, 54, 73) immediately upstream from the nozzle opening (7, 25, 32) has a lateral cross-section at least substantially the same as the shape of the nozzle opening.

6.  A nozzle system as claimed in claim 5 wherein said initial portion (16, 33) of the delivery passage (5, 23, 31, 54, 73) is defined between two opposed planar surfaces (17, 35) in spaced apart relationship.

7.  A nozzle system as claimed in claim 5 or 6 wherein the delivery passage (23) has an upstream opening (27) and the delivery passage (23) has a uniform lateral cross-section from the upstream opening (27) to the nozzle opening (25), the uniform lateral cross-section being at least substantially the same shape as the nozzle opening (27).

8.  A nozzle system as claimed in claim 7 wherein:

$$(H_N / T) \geq 2$$

where:

$H_N$ is the total length of the delivery passage (5) from the upstream opening (15) to the nozzle opening (7); and

T is the lateral thickness of the nozzle opening (7).

9. A nozzle system as claimed in claim 5 or 6 wherein the delivery passage (5, 31, 54, 73) has an upstream opening (15, 38), and includes a further portion (18, 34) between the upstream opening (15, 38) and the initial portion (16, 33) thereof, wherein the further portion (18, 34) of the delivery passage (5) has walls (19) diverging outwardly from the initial portion (16, 33) thereof.

10. A nozzle system as claimed in claim 9 wherein the further portion (34) of the delivery passage is wedge shaped.

11. A nozzle system as claimed in claim 9 wherein the further portion (18) extends outwardly from a slot shaped end to a circular said upstream opening (15).

12. A nozzle as claimed in any one of claims 9 to 11 wherein:

$$(H / T) \geq 2$$

where:

H is the length of the initial portion (16, 33) of the delivery passage (5, 31) immediately upstream from the nozzle opening (7, 32) of the nozzle body (3, 30); and
T is the lateral thickness of the nozzle opening (7,32) of the nozzle body (3, 31).

13. A nozzle system as claimed in claim 12 wherein:

$$(H_N - H) / T \geq 5$$

where:

$H_N$ is the total length of the delivery passage (5, 31) from the upstream opening (15, 38) to the nozzle opening (7, 32) of the nozzle body (3, 31).

14. A nozzle system as claimed in any one of claims 9 to 13 wherein the lateral cross-section of the delivery passage (5, 31, 54, 73) maintains an elongate length at least substantially the same as the elongate length of the nozzle opening (7, 32) from the upstream opening (15, 38) to the nozzle opening (7, 32).

15. A nozzle system as claimed in any one of claims 9 to 13 wherein the lateral cross-section of the delivery passage (5, 31, 54, 73) maintains an elongate length at least substantially the same as the elongate length of the nozzle opening (7, 32) for the initial portion (16, 33) of the delivery passage (5, 31, 54, 73) and the elongate length lateral cross-section of the delivery passage is equal to or greater than the elongate length of the nozzle opening (7, 32) and the further portion (18, 34) of the delivery passage (5, 31, 54, 73).

16. A nozzle system as claimed in any one of claims 9 to 15 wherein the angle of inclination of the walls (36) of the further portion (34) of the delivery passage (31) is equal to or less than 13° relative to the walls (35) of the initial portion (33) of the delivery passage (31).

17. A nozzle system according to any one of the preceding claims including a supply line (9) for supplying high or ultra high pressure liquid to the nozzle body (3, 21, 30, 50, 70), the supply line having an inner bore (11) with a lateral cross-section having dimensions which are greater than or equal to the length and width of the nozzle opening (7, 25, 32).

18. A nozzle system according to claim 17 further including flow straightening means provided immediately upstream of the nozzle body (3, 21, 30, 50, 70) within the inner bore (11) of the supply line (9).

19. A nozzle system according to claim 17 or 18 including a flow insert (39) located within the inner bore (11) of the supply line (9), the flow insert (35) having an insert passage (41) extending therethrough.

20. A nozzle system as claimed in claim 19 wherein the insert passage (41) has a lateral cross-section having a shape corresponding to the shape of the upstream opening (38) of the nozzle body (30).

21. A nozzle system as claimed in claim 20 wherein:

$$L_{N-1} \geq L_N$$

$$T_{N-1} \geq T_N$$

$$(H_{N-1} / T_{N-1}) \geq 5$$

$$L_N \geq L$$

where:

$L_N$ is the elongate length of the nozzle body upstream opening (38);

$L_{N-1}$ is the elongate length of the lateral cross-section of the insert passage (41);

$T_N$ is the lateral width of the nozzle body upstream opening (38); and

$T_{N-1}$ is the lateral width of the lateral cross-section of the insert passage (41).

22. A nozzle system as claimed in any one of the preceding claims wherein the nozzle body (50, 70) is formed from two nozzle body sections (51, 71), the nozzle body (50, 70) being split in a plane extending through the length of the delivery passage (54, 73) and bisecting the slot opening.

23. A nozzle system as claimed in claim 22 including at least one spacer element (62) located between the two nozzle body sections (51, 71) for defining the lateral thickness of the slot opening.

24. A nozzle system as claimed in claim 22 or 23 wherein each nozzle body section (71) includes a further separate base portion (72) formed of wear resistant material, the base portions (72), defining the nozzle opening of the nozzle body (70) when the two sections (71) are brought together.

25. A nozzle system as claimed in claim 24 wherein one of or each base portion (72) provides a land (76) extending into and providing a step between the further portion and the initial portion of the delivery passage.

26. A method is disintegrating material including exposing the material to a high or ultra high pressure liquid jet generated by a nozzle system according to any one of the preceding claims.

27. A method of disintegrating material including exposing the material to at least one high or ultra high pressure liquid jet to thereby disintegrate the material, the jet being provided by a high or ultra high pressure liquid nozzle system according to any one of the claims 1 to 25.

28. A method according to claim 27 including exposing the material to a plurality of said liquid jets.

29. A method of cleaning including exposing an area to be cleaned to a high or ultra high pressure liquid jet generated by a nozzle system according to any one of claims 1 to 25.

30. A liquid abrasive cleaning system (80) including:

a nozzle system according to any one of claims 1 to 25;
a mixing chamber (81) located downstream of the nozzle opening (77) through which the liquid jet is directed by the nozzle system, the mixing chamber (81) including supply means for supplying an abrasive material to the mixing chamber (81) for mixing with the liquid jet; and
a focusing conduit (85) extending from the mixing chamber (81) for directing the liquid jet mixed with abrasive material to an area to be cleaned.

31. A system as claimed in claim 30 wherein the mixing chamber (81) includes an elongate interior cavity (83) for accommodating the liquid jet, and the supply means includes at least one supply opening (84) located along at least one side of the elongate cavity (83) through which the abrasive material is supplied.

32. A system as claimed in claim 31 wherein supply openings (84) are provided on both sides of the elongate cavity (83) of the mixing chamber (81).

33. A system as claimed in any one of claims 30 to 32 wherein the focusing conduit (85) has a focusing passage (86) passing therethrough, the focusing passage (86) having a slot shaped lateral cross-section.

34. A system as claimed in claim 33 wherein:

$$(F / T) \geq 3$$

$$(L_F / T) \geq 100$$

where:

F is the lateral thickness of the focusing passage (86);
T is the lateral thickness of the nozzle opening (77) of the nozzle body (70); and
$L_F$ is the length of the focusing conduit (85).

**Patentansprüche**

1. Ein Düsensystem zur Abgabe einer Flüssigkeit mit hohem Druck oder Höchstdruck, wobei das Düsensystem eine Düsenhalterung (55) und einen Düsenkörper (50, 70) umfasst, wobei der Düsenkörper (50, 70) einen Abgabedurchgang (54, 73) aufweist, der dort hindurch zu einer Düsenöffnung an einer Endfläche (60) des Düsenkörpers (50, 70) geht, wobei die Düsenöffnung schlitzförmig ist, um dadurch einen relativ planar geformten Flüssigkeitsstrahl mit hohem Druck oder Höchstdruck daraus abzugeben, **dadurch gekennzeichnet, dass** die Düsenhalterung (55) eine Aussparung (56) aufweist, in der sich der Düsenkörper (50) befindet, wobei Flüssigkeit mit hohem Druck oder Höchstdruck um das Äußere des Düsenkörpers (50) zirkulieren kann.

2.  Düsensystem gemäß Anspruch 1, wobei die Düsenhalterung (55) eine innere Fläche (59) mit einer Austrittsöffnung (58) darin aufweist, wobei der Düsenkörper (50) in der Aussparung (56) so aufgenommen werden kann, dass die Düsenendfläche (60) mit der inneren Halterungsfläche (59) in abdichtenden Eingriff kommt und die Düsenöffnung nach der Austrittsöffnung (58) ausgerichtet ist, wodurch ein Flüssigkeitsstrahl, der aus der Düsenöffnung ausströmt, durch die Austrittsöffnung (58) austreten kann und wodurch der abdichtende Eingriff zwischen der Düsenendfläche (60) und der inneren Halterungsfläche (59) eine Flüssigkeitsdichtung dazwischen etabliert, die die ausgerichtete Düsenöffnung und Austrittsöffnung (58) umgibt.

3.  Düsensystem gemäß Anspruch 2, wobei der abdichtende Eingriff durch eine ringförmige Dichtung 57 etabliert wird, die um die ausgerichteten Öffnungen und zwischen der Düsenendfläche (60) und der inneren Halterungsfläche (59) angeordnet wird.

4.  Düsensystem gemäß Anspruch 3, wobei die ringförmige Dichtung (57) einen O-Ring (7) beinhaltet.

5.  Düsensystem gemäß einem der vorhergehenden Ansprüche, wobei mindestens ein anfänglicher Abschnitt (16, 33) des Abgabedurchgangs (5, 23, 31, 54, 73) unmittelbar stromaufwärts von der Düsenöffnung (7, 25, 32) einen lateralen Querschnitt aufweist, der mindestens im Wesentlichen die gleiche Form aufweist wie die Düsenöffnung.

6.  Düsensystem gemäß Anspruch 5, wobei der anfängliche Abschnitt (16, 33) des Abgabedurchgangs (5, 23, 31, 54, 73) zwischen zwei sich gegenüberliegenden planaren Oberflächen (17, 35) in einer mit Abstand angeordneten Beziehung definiert wird.

7.  Düsensystem gemäß Anspruch 5 oder 6, wobei der Abgabedurchgang (23) eine stromaufwärts gelegene Öffnung (27) aufweist und der Abgabedurchgang (23) von der stromaufwärts gelegenen Öffnung (27) zu der Düsenöffnung (25) einen gleichförmigen lateralen Querschnitt aufweist, wobei der gleichförmige laterale Querschnitt mindestens im Wesentlichen die gleiche Form wie die Düsenöffnung (25) aufweist.

8.  Düsensystem gemäß Anspruch 7, wobei:

$$(H_N / T) \geq 2$$

wobei:

H_N die Gesamtlänge des Abgabedurchgangs (5) von der stromaufwärts gelegenen Öffnung (15) zu der Düsenöffnung (7) ist; und T die laterale Dicke der Düsenöffnung (7) ist.

9.  Düsensystem gemäß Anspruch 5 oder 6, wobei der Abgabedurchgang (5, 31, 54, 73) eine stromaufwärts gelegene Öffnung (15, 38) aufweist und einen weiteren Abschnitt (18, 34) zwischen der stromaufwärts gelegenen Öffnung (15, 38) und dem anfänglichen Abschnitt (16, 33) davon umfasst, wobei der weitere Abschnitt (18, 34) des Abgabedurchgangs (5) Wände (19) aufweist, die von dem anfänglichen Abschnitt (16, 33) davon nach außen auseinander gehen.

10. Düsensystem gemäß Anspruch 9, wobei der weitere Abschnitt (34) des Abgabedurchgangs keilförmig ist.

11. Düsensystem gemäß Anspruch 9, wobei sich der weitere Abschnitt (18) von einem schlitzförmigen Ende zu einem kreisförmigen, der stromaufwärts gelegenen Öffnung (15), nach außen erstreckt.

12. Eine Düse gemäß einem der Ansprüche 9 bis 11, wobei:

$$(H / T) \geq 2$$

wobei:

H die Länge des anfänglichen Abschnitts (16, 33) des Abgabedurchgangs (5, 31) unmittelbar stromaufwärts von der Düsenöffnung (7, 32) des Düsenkörpers (3, 30) ist; und T die laterale Dicke der Düsenöffnung (7, 32) des Düsenkörpers (3, 30) ist.

13. Düsensystem gemäß Anspruch 12, wobei:

$$(H_N - H) / T \geq 5$$

wobei:

H_N die Gesamtlänge des Abgabedurchgangs (5, 31) von der stromaufwärts gelegenen Öffnung (15, 38) zu der Düsenöffnung (7, 32) des Düsenkörpers (3, 30) ist.

14. Düsensystem gemäß einem der Ansprüche 9 bis 13, wobei der laterale Querschnitt des Abgabedurchgangs (5, 31, 54, 73) von der stromaufwärts gelegenen Öffnung (15, 38) zu der Düsenöffnung (7, 32) eine längliche Länge beibehält, die mindestens im Wesentlichen die gleiche wie die längliche Länge der Düsenöffnung (7, 32) ist.

15. Düsensystem gemäß einem der Ansprüche 9 bis 13, wobei der laterale Querschnitt des Abgabedurchgangs (5, 31, 54, 73) über den anfänglichen Abschnitt (16, 33) des Abgabedurchgangs (5, 31, 54, 73) eine längliche Länge beibehält, die mindestens im Wesentlichen die gleiche wie die längliche Länge der Düsenöffnung (7, 32) ist, und die längliche Länge des lateralen Querschnitts des Abgabedurchgangs gleich der länglichen Länge der Düsenöffnung (7, 32) und des weiteren Abschnitts (18, 34) des Abgabedurchgangs (5, 31, 54, 73) oder größer ist.

16. Düsensystem gemäß einem der Ansprüche 9 bis 15, wobei der Neigungswinkel der Wände (36) des weiteren Abschnitts (34) des Abgabedurchgangs (31) relativ zu den Wänden (35) des anfänglichen Abschnitts (33) des Abgabedurchgangs (31) gleich oder kleiner als 13° ist.

17. Düsensystem gemäß einem der vorhergehenden Ansprüche, das eine Zufuhrleitung (9) zum Zuführen von Flüssigkeit mit hohem Druck oder Höchstdruck zu dem Düsenkörper (3, 21, 30, 50, 70) umfasst, wobei die Zufuhrleitung eine innere Bohrung (11) mit einem lateralen Querschnitt, der Dimensionen aufweist, die größer als die Länge und Breite der Düsenöffnung (7, 25, 32) oder gleich dieser sind, aufweist.

18. Düsensystem gemäß Anspruch 17, das ferner ein Durchflussgleichrichtungsmittel umfasst, das unmittelbar stromaufwärts von dem Düsenkörper (3, 21, 30, 50, 70) innerhalb der inneren Bohrung (11) der Zufuhrleitung (9) bereitgestellt ist.

19. Düsensystem gemäß Anspruch 17 oder 18, das einen Durchflusseinsatz (39) umfasst, der sich innerhalb der inneren Bohrung (11) der Zufuhrleitung (9) befindet, wobei der Durchflusseinsatz (39) einen Einsatzdurchgang (41) aufweist, der sich dort hindurch erstreckt.

20. Düsensystem gemäß Anspruch 19, wobei der Einsatzdurchgang (41) einen lateralen Querschnitt aufweist, der eine Form aufweist, die der Form der stromaufwärts gelegenen Öffnung (38) des Düsenkörpers (30) entspricht.

21. Düsensystem gemäß Anspruch 20, wobei:

$$L_{N-1} \geq L_N$$

$$T_{N-1} \geq T_N$$

$$(H_{N-1} / T_{N-1}) \geq 5$$

$$L_N \geq L$$

wobei:

$L_N$ die längliche Länge der stromaufwärts gelegenen Öffnung (38) des Düsenkörpers ist;
$L_{N-1}$ die längliche Länge des lateralen Querschnitts des Einsatzdurchgangs (41) ist;
$T_N$ die laterale Breite der stromaufwärts gelegenen Öffnung (38) des Düsenkörpers ist; und
$T_{N-1}$ die laterale Breite des lateralen Querschnitts des Einsatzdurchgangs (41) ist.

22. Düsensystem gemäß einem der vorhergehenden Ansprüche, wobei der Düsenkörper (50, 70) aus zwei Teilabschnitten (51, 71) des Düsenkörpers gebildet ist, wobei der Düsenkörper (50, 70) in einer Ebene gespalten wird, die sich durch die Länge des Abgabedurchgangs (54, 73) erstreckt und die Schlitzöffnung halbiert.

23. Düsensystem gemäß Anspruch 22, das mindestens ein Abstandshalterelement (62) umfasst, das sich zwischen den zwei Teilabschnitten (51, 71) des Düsenkörpers befindet, um die laterale Dicke der Schlitzöffnung zu definieren.

24. Düsensystem gemäß Anspruch 22 oder 23, wobei jeder Teilabschnitt (71) des Düsenkörpers einen weiteren separaten Basisabschnitt (72) umfasst, der aus einem abnutzungsbeständigen Material gebildet ist, wobei die Basisabschnitte (72) die Düsenöffnung des Düsenkörpers (70) definieren, wenn die zwei Teilabschnitte (71) zusammengebracht werden.

25. Düsensystem gemäß Anspruch 24, wobei einer der Basisabschnitte (72) oder jeder Basisabschnitt (72) eine Anschlussfläche (76) bereitstellt, die sich in den weiteren Abschnitt und anfänglichen Abschnitt des Abgabedurchgangs erstreckt und zwischen ihnen eine Stufe bereitstellt.

26. Ein Verfahren zum Abbauen von Material, das umfasst, dass das Material einem Flüssigkeitsstrahl mit hohem Druck oder Höchstdruck ausgesetzt wird, der durch ein Düsensystem gemäß einem der vorhergehenden Ansprüche erzeugt wird.

27. Verfahren zum Abbauen von Material, das umfasst, dass das Material mindestens einem Flüssigkeitsstrahl mit hohem Druck oder Höchstdruck ausgesetzt wird, um das Material dadurch abzubauen, wobei der Strahl durch ein Düsensystem für Flüssigkeit mit hohem Druck oder Höchstdruck gemäß einem der Ansprüche 1 bis 25 bereitgestellt wird.

28. Verfahren gemäß Anspruch 27, das umfasst, dass das Material einer Vielzahl von Flüssigkeitsstrahlen ausgesetzt wird.

29. Verfahren zum Reinigen, das umfasst, dass ein zu reinigender Bereich einem Flüssigkeitsstrahl mit hohem Druck oder Höchstdruck ausgesetzt wird, der durch ein Düsensystem gemäß einem der Ansprüche 1 bis 25 erzeugt wird.

30. Ein Flüssigabrasivreinigungssystem (80), das Folgendes umfasst:

   ein Düsensystem gemäß einem der Ansprüche 1 bis 25;
   eine Mischkammer (81), die sich stromabwärts von der Düsenöffnung (77) befindet, durch die der Flüssigkeitsstrahl von dem Düsensystem gelenkt wird, wobei die Mischkammer (81) ein Zufuhrmittel zum Zuführen eines abrasiven Materials zu der Mischkammer (81) zum Mischen mit dem Flüssigkeitsstrahl umfasst; und
   einen Richtkanal (85), der sich von der Mischkammer (81) erstreckt, um den mit dem abrasiven Material gemischten Flüssigkeitsstrahl zu einem Bereich, der gereinigt werden soll, zu lenken.

31. System gemäß Anspruch 30, wobei die Mischkammer (81) eine längliche Innenaussparung (83) umfasst, um den Flüssigkeitsstrahl unterzubringen, und das Zufuhrmittel mindestens eine Zufuhröffnung (84) umfasst, die sich entlang mindestens einer Seite der länglichen Aussparung (83) befindet, durch die das abrasive Material zugeführt wird.

32. System gemäß Anspruch 31, wobei auf beiden Seiten der länglichen Aussparung (83) der Mischkammer (81) Zufuhröffnungen (84) bereitgestellt sind.

33. System gemäß einem der Ansprüche 30 bis 32, wobei der Richtkanal (85) einen Richtdurchgang (86) aufweist, der dort hindurch geht, wobei der Richtdurchgang (86) einen schlitzförmigen lateralen Querschnitt aufweist.

34. System gemäß Anspruch 33, wobei:

$$(F / T) \geq 3$$

$$(L_F / T) \geq 100$$

wobei:

   F die laterale Dicke der Richtöffnung (86) ist;
   T die laterale Dicke der Düsenöffnung (77) des Düsenkörpers (70) ist; und
   $L_F$ die Länge des Richtkanals (85) ist.

## Revendications

1. Un système de buse pour distribuer un liquide à haute ou très haute pression, le système de buse incluant un support de buse (55) et un corps de buse (50, 70), le corps de buse (50, 70) présentant un passage de distribution (54, 73) qui passe au travers de celui-ci jusqu'à un orifice de buse au niveau d'une face d'extrémité (60) du corps de buse (50, 70), dans lequel l'orifice de buse présente la configuration d'une fente afin de distribuer de ce fait un jet de liquide à haute ou très haute pression de configuration relativement plane depuis celui-ci, **caractérisé par le fait que** le support de buse (55) présente une cavité (56) dans laquelle le corps de buse (50) est placé, dans laquelle du liquide à haute ou très haute pression peut circuler autour de l'extérieur du corps de buse (50).

2. Un système de buse selon la revendication 1, dans lequel le support de buse (55) présente une face interne (59) dans laquelle il y a un orifice d'évacuation (58), le corps de buse (50) pouvant être reçu dans la cavité (56) de façon à ce que la face d'extrémité de buse (60) soit en engagement hermétique avec la face interne de support (59) et que l'orifice de buse soit en alignement avec l'orifice d'évacuation (58), grâce à quoi un jet de liquide sortant de l'orifice de buse peut s'évacuer par l'orifice d'évacuation (58) et grâce à quoi l'engagement hermétique entre la face d'extrémité de buse (60) et la face interne de support (59) établit un joint hermétique au liquide entre celles-ci entourant l'orifice de buse et l'orifice d'évacuation (58) alignés.

3. Un système de buse selon la revendication 2 dans lequel ledit engagement hermétique est établi grâce à un joint hermétique annulaire 57 disposé autour des orifices alignés et entre la face d'extrémité de buse (60) et la face interne de support (59).

4.  Un système de buse selon la revendication 3 dans lequel le joint hermétique annulaire (57) comprend un joint torique (7).

5.  Un système de buse tel que revendiqué dans l'une quelconque des revendications précédentes dans lequel au moins une portion initiale (16, 33) du passage de distribution (5, 23, 31, 54, 73) juste en amont de l'orifice de buse (7, 25, 32) présente une coupe transversale latérale au moins substantiellement identique à la configuration de l'orifice de buse.

6.  Un système de buse tel que revendiqué dans la revendication 5 dans lequel ladite portion initiale (16, 33) du passage de distribution (5, 23, 31, 54, 73) est définie entre deux surfaces planes opposées (17, 35) en relation d'espacement l'une par rapport à l'autre.

7.  Un système de buse tel que revendiqué dans la revendication 5 ou 6 dans lequel le passage de distribution (23) présente un orifice amont (27) et le passage de distribution (23) présente une coupe transversale latérale uniforme de l'orifice amont (27) à l'orifice de buse (25), la coupe transversale latérale uniforme présentant une configuration au moins substantiellement identique à celle de l'orifice de buse (25).

8.  Un système de buse tel que revendiqué dans la revendication 7 dans lequel :

$$(H_N \,/\, T) \geq 2$$

où :

H_N est la longueur totale du passage de distribution (5) depuis l'orifice amont (15) jusqu'à l'orifice de buse (7) ; et
T est l'épaisseur latérale de l'orifice de buse (7).

9.  Un système de buse tel que revendiqué dans la revendication 5 ou 6 dans lequel le passage de distribution (5, 31, 54, 73) présente un orifice amont (15, 38), et inclut une portion supplémentaire (18, 34) entre l'orifice amont (15, 38) et la portion initiale (16, 33) de celui-ci, où la portion supplémentaire (18, 34) du passage de distribution (5) présente des parois (19) divergeant vers l'extérieur depuis la portion initiale (16, 33) de celui-ci.

10. Un système de buse tel que revendiqué dans la revendication 9 dans lequel la portion supplémentaire (34) du passage de distribution est cunéiforme.

11. Un système de buse tel que revendiqué dans la revendication 9 dans lequel la portion supplémentaire (18) s'étend vers l'extérieur depuis une extrémité à configuration de fente jusqu'à un dit orifice amont circulaire (15).

12. Une buse telle que revendiquée dans l'une quelconque des revendications 9 à 11 dans laquelle :

$$(H \,/\, T) \geq 2$$

où :

H est la longueur de la portion initiale (16, 33) du passage de distribution (5, 31) juste en amont de l'orifice de buse (7, 32) du corps de buse (3, 30) ; et
T est l'épaisseur latérale de l'orifice de buse (7, 32) du corps de buse (3, 30).

13. Un système de buse tel que revendiqué dans la revendication 12 dans lequel :

$$(H_N - H) \,/\, T \geq 5$$

où :

H_N est la longueur totale du passage de distribution (5, 31) depuis l'orifice amont (15, 38) jusqu'à l'orifice de buse (7, 32) du corps de buse (3, 30).

14. Un système de buse tel que revendiqué dans l'une quelconque des revendications 9 à 13 dans lequel la coupe transversale latérale du passage de distribution (5, 31, 54, 73) maintient une longueur allongée au moins substantiellement identique à la longueur allongée de l'orifice de buse (7, 32) depuis l'orifice amont (15, 38) jusqu'à l'orifice de buse (7, 32).

15. Un système de buse tel que revendiqué dans l'une quelconque des revendications 9 à 13 dans lequel la coupe transversale latérale du passage de distribution (5, 31, 54, 73) maintient une longueur allongée au moins substantiellement identique à la longueur allongée de l'orifice de buse (7, 32) pour la portion initiale (16, 33) du passage de distribution (5, 31, 54, 73) et la longueur allongée de la coupe transversale latérale du passage de distribution est égale ou supérieure à la longueur allongée de l'orifice de buse (7, 32) et la portion supplémentaire (18, 34) du passage de distribution (5, 31, 54, 73).

**16.** Un système de buse tel que revendiqué dans l'une quelconque des revendications 9 à 15, dans lequel l'angle d'inclinaison des parois (36) de la portion supplémentaire (34) du passage de distribution (31) est inférieur ou égal à 13 par rapport aux parois (35) de la portion initiale (33) du passage de distribution **(31).**

**17.** Un système de buse selon l'une quelconque des revendications précédentes, incluant un tuyau d'amenée (9) destiné à amener du liquide à haute ou très haute pression jusqu'au corps de buse (3, 21, 30, 50, 70), le tuyau d'amenée présentant un alésage interne (11) ayant une coupe transversale latérale dont les dimensions sont supérieures ou égales à la longueur et à la largeur de l'orifice de buse (7, 25, 32).

**18.** Un système de buse selon la revendication 17 incluant en outre un moyen de tranquillisation de flux fourni juste en amont du corps de buse (3, 21, 30, 50, 70) à l'intérieur de l'alésage interne (11) du tuyau d'amenée (9).

**19.** Un système de buse selon la revendication 17 ou 18 incluant un insert pour flux (39) placé à l'intérieur de l'alésage interne (11) du tuyau d'amenée (9), l'insert pour flux (39) présentant un passage d'insert (41) qui s'étend au travers de celui-ci.

**20.** Un système de buse tel que revendiqué dans la revendication 19 dans lequel le passage d'insert (41) présente une coupe transversale latérale présentant une configuration qui correspond à la configuration de l'orifice amont (38) du corps de buse (30).

**21.** Un système de buse tel que revendiqué dans la revendication 20 dans lequel :

$$L_{N-1} \geq L_N$$

$$T_{N-1} \geq T_N$$

$$(H_{N-1} / T_{N-1}) \geq 5$$

$$L_N \geq L$$

où :

$L_N$ est la longueur allongée de l'orifice amont de corps de buse (38) ;

$L_{N-1}$ est la longueur allongée de la coupe transversale latérale du passage d'insert (41) ;

$T_N$ est la largeur latérale de l'orifice amont de corps de buse (38) ; et

$T_{N-1}$ est la largeur latérale de la coupe transversale latérale du passage d'insert (41).

**22.** Un système de buse tel que revendiqué dans l'une quelconque des revendications précédentes dans lequel le corps de buse (50, 70) est formé à partir de deux sections de corps de buse (51, 71), le corps de buse (50, 70) étant divisé dans un plan qui s'étend sur la longueur du passage de distribution (54, 73) et qui coupe en deux parties égales l'orifice en fente.

**23.** Un système de buse tel que revendiqué dans la revendication 22 incluant au moins un élément espaceur (62) placé entre les deux sections de corps de buse (51, 71) pour définir l'épaisseur latérale de l'orifice en fente.

**24.** Un système de buse tel que revendiqué dans la revendication 22 ou 23 dans lequel chaque section de corps de buse (71) inclut une portion de base distincte supplémentaire (72) formée en matériau résistant à l'usure, les portions de base (72) définissant l'orifice de buse du corps de buse (70) lorsque les deux sections (71) sont amenées au contact l'une de l'autre.

**25.** Un système de buse tel que revendiqué dans la revendication 24 dans lequel l'une ou chacune des portions de base (72) fournit un appui (76) qui s'étend dans et fournit un palier entre la portion supplémentaire et la portion initiale du passage de distribution.

**26.** Un procédé de désintégration de matériau incluant exposer le matériau à un jet de liquide à haute ou très haute pression généré par un système de buse selon l'une quelconque des revendications précédentes.

**27.** Un procédé de désintégration de matériau incluant exposer le matériau à au moins un jet de liquide à haute ou très haute pression pour désintégrer de ce fait le matériau, le jet étant fourni par un système de buse pour liquide à haute ou très haute pression selon l'une quelconque des revendications 1 à 25.

**28.** Un procédé selon la revendication 27 incluant exposer le matériau à une pluralité desdits jets de liquide.

**29.** Un procédé de nettoyage incluant exposer une zone à nettoyer à un jet de liquide à haute ou très haute pression généré par un système de buse selon l'une quelconque des revendications 1 à 25.

**30.** Un système de nettoyage abrasif liquide (80) incluant :

un système de buse selon l'une quelconque des revendications 1 à 25 ;

une chambre de mélange (81) placée en aval de l'orifice de buse (77) au travers de laquelle le système de buse dirige le jet de liquide, la chambre de mélange (81) incluant un moyen d'amenée pour amener un matériau abrasif jusqu'à la chambre de mélange (81) pour qu'il se mélange au jet de liquide ; et

une canalisation de concentration (85) qui s'étend à partir de la chambre de mélange (81) pour diriger le jet de liquide mélangé au matériau abrasif sur une zone à nettoyer.

**31.** Un système tel que revendiqué dans la revendication 30 dans lequel la chambre de mélange (81) inclut une cavité intérieure allongée (83) destinée à recevoir le jet de liquide, et le moyen d'amenée inclut au moins un orifice d'amenée (84) placé le long d'au moins un côté de la cavité allongée (83) au travers duquel le matériau abrasif est amené.

**32.** Un système tel que revendiqué dans la revendication 31 dans lequel des orifices d'amenée (84) sont fournis sur les deux côtés de la cavité allongée (83) de la chambre de mélange (81).

**33.** Un système tel que revendiqué dans l'une quelconque des revendications 30 à 32, dans lequel la canalisation de concentration (85) présente un passage de concentration (86) qui passe au travers de celle-ci, le passage de concentration (86) présentant une coupe transversale latérale à configuration de fente.

**34.** Un système tel que revendiqué dans la revendication 33 dans lequel:

$$(F \, / \, T) \geq 3$$

$$(L_F \, / \, T) \geq 100$$

où :

T est l'épaisseur latérale du passage de concentration (86) ;

T est l'épaisseur latérale de l'orifice de buse (77) du corps de buse (70) ; et

$L_F$ est la longueur de la canalisation de concentration (85).

## Fig 1.

# Fig 2a.

# Fig 2b.
## Section A-A

# Fig 2c.
## Section B-B

Fig 3.

Fig 4a.

Fig 4b.

# Fig 5a.

# Fig 5b.

Section A-A

# Fig 5c.

Section B-B

Fig 6a.

LN-1 11

39 9

A A

1

41

13

HN-1

38

LN

30

31

15

32

L

Fig 6b.

Section A-A

39 41

9

TN-1

Fig 7a.

Fig 7b.

Fig 8a.

Fig 8b.

Fig 9a.

Fig 9b.

**Fig 10a.**

**Fig 10b.**

**Fig 11a.**

**Fig 11b.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5626508 A, Rankin
- US 5785582 A, Stefanik
- US 4633623 A, Spitz
- US 5482215 A, Veres